# EUROPEAN PATENT SPECIFICATION

(11) **EP 2 704 486 B1**
(45) Date of publication and mention of the grant of the patent: **26.05.2021**
(21) Application number: 13162519.6
(22) Date of filing: 05.04.2013
(51) Int. Cl.: H04W 36/14

(54) **Network Sharing and Reverse Single Radio Voice Call Continuity**
Netzwerk-Sharing und umgekehrte Einzelfunksprachanrufkontinuität
Partage de réseau et continuité inversée d'un appel vocal radio unique

(30) Priority: 11.04.2012 WO PCT/US2012/033003
(43) Date of publication of application: 05.03.2014
(73) Proprietor: Nokia Solutions and Networks Oy, 02610 Espoo (FI)
(72) Inventor: Wong, Curt, Sammamish, WA Washington 98075 (US); Lahtinen, Lauri Kalevi, 02650 Espoo (FI)
(74) Representative: TBK

(56) References cited:
- WO-A1-2011/079802
- US-A1- 2006 073 831
- "3rd Generation Partnership Project; Technical Specification Group Services and System Aspects; Network Sharing; Architecture and functional description (Release 11)", 3GPP STANDARD; 3GPP TS 23.251, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.1.0, 8 March 2012 (2012-03-08), pages 1-28, XP050555340, [retrieved on 2012-03-08]
- NOKIA SIEMENS NETWORKS: "Network Sharing scenario in rSRVCC", 3GPP DRAFT; S2-121507_RSRVCC SHARING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava , Slovakia; 20120416 - 20120420, 11 April 2012 (2012-04-11), XP050632005, [retrieved on 2012-04-11]
- "3rd Generation Partnership Project; Technical Specification Group Core Network and Terminals; Evolved Packet System (EPS); 3GPP Sv interface (MME to MSC, and SGSN to MSC) for SRVCC (Release 8)", 3GPP STANDARD ; TECHNICAL SPECIFICATION ; 3GPP TS 29.280, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V8.8.0, 17 December 2011 (2011-12-17), pages 1-14, XP051297172, [retrieved on 2011-12-17]
- "3rd Generation Partnership Project; Technical Specification Group Radio Access Network; UTRAN Iu interface Radio Access Network Application Part (RANAP) signalling (Release 10)", 3GPP STANDARD; 3GPP TS 25.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.1, 5 January 2011 (2011-01-05), pages 1-409, XP050462527, [retrieved on 2011-01-05]
- NOKIA SIEMENS NETWORKS: "Reverse SRVCC, rSGSN selection", 3GPP DRAFT; S2-110720 RSRVCC-SGSN SEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523903, [retrieved on 2011-02-15]
- NOKIA SIEMENS NETWORKS: "rSRVCC in network sharing with LTE to CS and back to LTE", 3GPP DRAFT; S2-121508 RSRVCC TS 23.251 CASE1-2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava , Slovakia; 20120416 - 20120420, 11 April 2012 (2012-04-11), XP050632006, [retrieved on 2012-04-11]

## Description

### BACKGROUND:

### Field:

Certain networks can operate using circuit switched infrastructure, while other networks may operate using infrastructure for the long term evolution (LTE) of the third generation partnership project (3GPP). Devices can operate across the boundaries of these networks. Thus, such devices as well as the networks may benefit from network sharing in reverse single radio voice call continuity.

Certain networks can also operate using circuit switched infrastructure itself with multiple operators. Devices can operate across the boundaries of multiple operators' covered areas within these networks. Thus, such devices as well as the networks may benefit from network sharing while maintaining voice call continuity between or among operators' covered areas.

### Description of the Related Art:

In Release 8 (Rel 8), 3GPP specified single radio voice call continuity (SRVCC) from LTE to second or third generation (2/3G) circuit switched (CS). SRVCC can refer to the procedures for continuity and alternatively can also be used to describe the action of using such procedures. In Rel 11, 3GPP specified SRVCC in the 2/3G CS to LTE packet switched (PS) direction, namely reverse SRVCC (rSRVCC). Network sharing with behavior for handover target selection from LTE to 2/3G CS is described in 3GPP technical specification (TS) 23.251, which is incorporated herein by reference in its entirety. However, network sharing behavior for handover from CS domain to LTE has not been defined in 3GPP.

Network sharing behavior for handover from CS domain to another CS domain is described in 3GPP TS 23.251.

US 2006/073831 A1 relates to transfer of a user equipment from a first network to a second network. In the method a user equipment communicating with the first network is transferred to the second network providing resources to a plurality of operators. After initiation of the transfer, an operator is selected for the user equipment amongst the plurality of operators. A controller of the second network is then provided with information regarding the identity of the selected operator, and the user equipment is transferred to the second network. Information regarding the identity of the selected operator is also sent to the user equipment.

3GPP TS 23.251, V11.1.0 relates to sharing of a radio access network by a number of core networks. In the case of relocation to a shared network a source RNC determines a core network operator to be used in the target network based on available shared networks access control information, current PLMN in use, or similar information present in the node. At relocation, the source RNC indicates that selected core network operator to the source core network node as part of a TAI/RAI sent in a Relocation required message. The selected target core network operator should be the same as the one in use. This is accomplished by not changing the serving PLMN if the PLMN in use is supported in the target cell. If the PLMN in use is not supported in the target cell the RNC selects the target PLMN based on either (i) pre-configured information in the RNC, or (ii) the SNA (Shared Network Area) Access Information IE provided by the SGSN.

Nokia Siemens Networks: Network Sharing scenario in rSRVCC, 3GPP Draft; S2-121507_RSRVCC Sharing, 3rd Generation Partnership Project (3GPP), Mobile Competence Centre; 650, Route des Lucioles, F-06921 Sophia Antipolis Cedex; France, vol. SA WG2, no. Bratislava, Slovakia, 20120416-20120420, 11 April 2012 (2012-04-11).

3rd Generation Partnership Project; Technical Specification Group Core Network and Terminals; Evolved Packet System (EPS); 3GPP Sv interface (MME to MSC, and SGSN to MSC) for SRVCC (Release 8), 3GPP Standard; Technical Specification; 3GPP TS 29.280, vol. CT WG4 no. V8.8.0, 17 December 2011 (2011-12-17), pages 1-14.

### SUMMARY:

**The invention is defined by the claims.**

### BRIEF DESCRIPTION OF THE DRAWINGS:

For proper understanding of the invention, reference should be made to the accompanying drawings, wherein:
Figure 1 illustrates possible network-sharing scenarios.
Figure 2 illustrates the sharing of a circuit switched public land mobile network by two long term evolution mobile networks, according to certain embodiments.
Figure 3A illustrates a signaling flow according to certain embodiments.
Figure 3B illustrates a signaling flow according to certain embodiments.
Figure 4 illustrates a method according to certain embodiments.
Figure 5A illustrates a system according to certain embodiments.
Figure 5B illustrates a system according to certain embodiments.

### DETAILED DESCRIPTION:

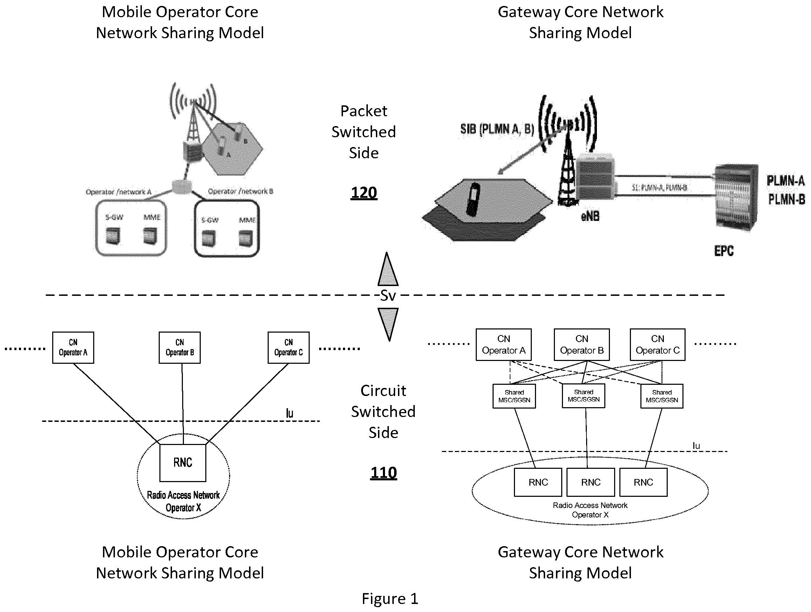

Figure 1 illustrates possible network-sharing scenarios. In the sharing scenarios, the circuit switched (CS) domain 110 may be configured with Mobile Operator Core Network (MOCN) sharing models (lower left side of Figure 1) and Gateway Core Network (GWCN) sharing model (lower right side of Figure 1). On the long term evolution (LTE) side 120, the network may be configured similarly: upper left of Figure 1 shows MOCN, upper right of Figure 1 shows GWCN models. The connection between the LTE and CS domain may be the Sv interface, which is defined in 3GPP.

Figure 1 more particularly illustrates several CN Operators respectively CN Operator A 111a, CN Operator B 111b, and CN Operator C 111c. The figure also illustrates shared MSC/SGSNs 112a, 112b, and 112c. The figure further illustrates a radio access network (RAN) belonging to operator X 113. In the RAN one may find one or more radio network controllers (RNCs) 114. All these may be found on the CS domain side 110.

On the packet switched domain side 120, there is illustrated an evolved packet core element 121, connected to a eNode B (eNB) 122, which is serving a cell 123 and a user equipment 124. The operator networks 125 can specifically comprise such elements as S-GW 126 and MME 127.

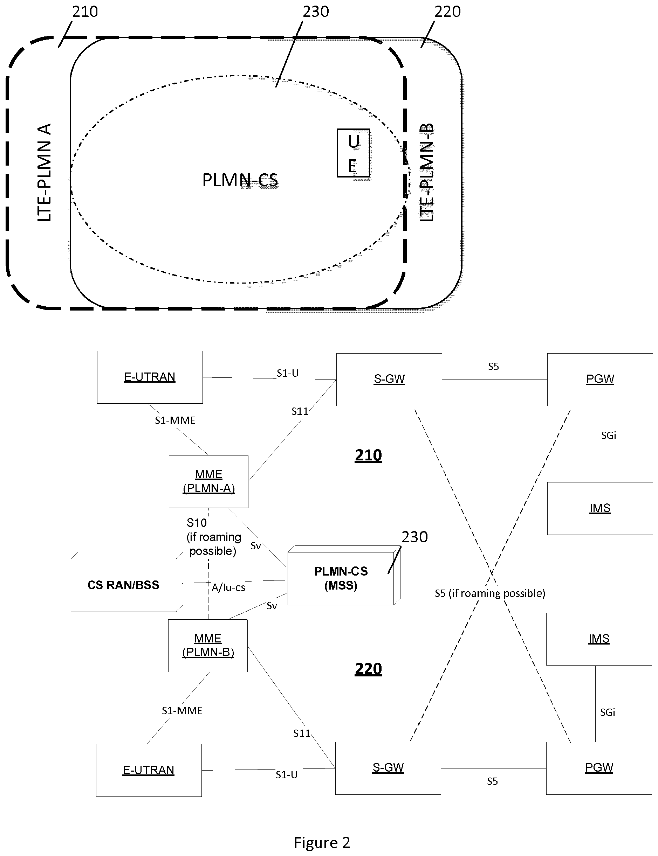

As mentioned above, network sharing behavior from CS domain to LTE has not been defined in 3GPP. In particular, the scenario illustrated in Figure 2 is not conventionally addressed.

Figure 2 illustrates the sharing of a circuit switched public land mobile network by two long term evolution mobile networks, according to certain embodiments. More particularly, Figure 2 shows that the serving area may comprise two LTE PLMNs, LTE-PLMN A 210 and LTE-PLMN B 220, and they both may use the same CS PLMN-CS 230 for single radio voice call continuity (SRVCC). This may be viewed as two green field LTE operators relaying on 3rd party CS Domain for SRVCC. A Venn diagram illustrates the sharing at top, while a network connection view is shown at the bottom of Figure 2.

The two LTE networks 210 and 220 can comprise respect MMEs 211 and 221, respective E-UTRANs 212 and 222, respective S-GWs 213 and 223, respective PGWs 214 and 224, and respective IMSs 215 and 225. Also illustrated is the CS RAN/BSS 235 connected to the PLMN-CS (MSS) 230.

In one case, a user equipment (UE) may start an internet protocol (IP) multimedia subsystem (IMS) voice session with PLMN-A and SRVCC over to PLMN-CS. The source evolved universal terrestrial radio access network (E-UTRAN) may select the "target CS PLMN" and may send this selected "target CS PLMN" in a message to the PLMN-CS's MSS via Sv for target resource handling. When this call is returned, going back from CS to LTE with rSRVCC, the CS radio node, such as for example a BTS or NodeB, can select the target LTE PLMN based on a current PLMN in use. This may still be the selected "CS PLMN". This "CS PLMN" may perform rSRVCC to either LTE-PLMN-A or LTE-PLMN-B.

If a wrong LTE-PLMN is selected, the result may be rSRVCC failure if, for example, the radio node decided to use LTE-PLMN-B but LTE-PLMN-B and LTE-PLMN-A do not have roaming agreement. This may be because the serving gateway (S-GW) in the PLMN-B cannot establish an S5 connection with the proxy gateway (P-GW) in PLMN-A or the MME in the PLMN-B cannot establish an S10 connection with the MME in PLMN-A. The S5 and S10 connections are shown with dotted lines in Figure 2. In other words, in this example for rSRVCC to work, the P-GW established prior to rSRVCC must be the anchor point also after rSRVCC, and the new MME (B) must be able to retrieve the user equipment (UE) Packet Switch user information from old MME (A).

Moreover, even if the rSRVCC may be successful because LTE-PLMN-A and LTE-PLMN-B have a roaming agreement, the result may be a roaming S5 unnecessarily being established, when the call could have been handled in LTE-PLMN-A directly. This may also lead to unnecessary roaming charges because an additional PLMN is involved.

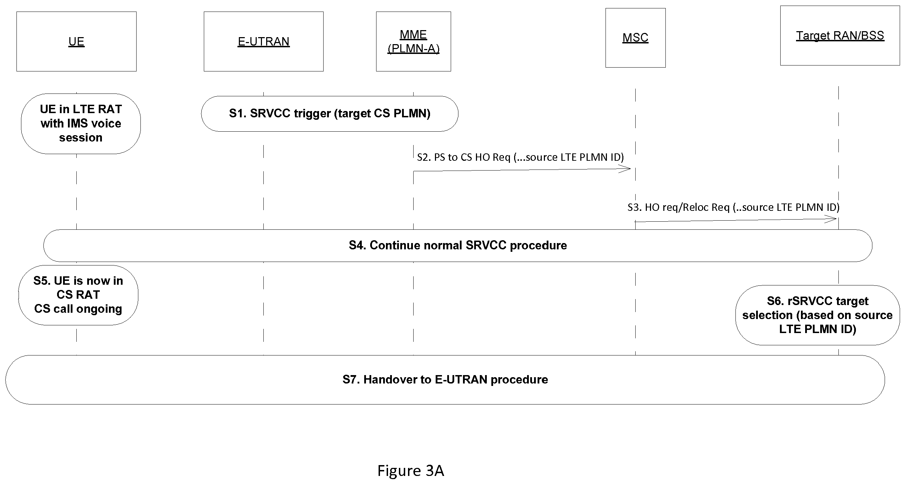

Certain embodiments provide a way by which the radio node, such as for example a BTS or NodeB, can decide which PLMN (A or B) to use for target LTE selection. Figure 3A illustrates a signaling flow according to certain embodiments.

As shown in Figure 3A, when the call may be first SRVCC from LTE to CS at B1, the source LTE PLMN-ID may be carried to MSS via Sv interface in PS to CS handover request message at B2.

At B3, if the CS PLMN supports rSRVCC, the MSS may also indicate this "source LTE PLMN-ID" to target BSS/RAN. Moreover, at B4 and B5, the rest of the SRVCC procedure may be executed and the UE may be now served by CS RAT. The voice call may be continuing in CS Domain.

If there may be an inter/intra CS RATs handover, the source BSS/RAN may forward the "source LTE PLMN-ID" to the target BSS/RAN. This is not shown in Figure 3A.

At B6, when the current serving CS RAT may need to perform rSRVCC target selection, it may use the "source LTE PLMN-ID" as one of the input for target LTE selection to ensure the selected PLMN will not result in a fail call. Thus, the current serving CS RAT may select an LTE cell that belongs to a source LTE PLMN-ID. Alternatively, the current serving CS RAT may select a roaming partner of the source LTE PLMN as a next option. The Neighbor cell list for UE measurement may be also based on the "source LTE PLMN-ID".

At B7, the source BSS/RAN may pass the selected target LTE PLMN back to the MSS to continue the normal rSRVCC procedure.

Thus, in certain embodiments the source LTE PLMN ID may be given to the CS PLMN and it may be passed within the CS PLMN from source to target during intra/inter RAT CS handover.

Another aspect of certain embodiments may be that the MSS stores the source LTE PLMN ID for a further new CS call. This stored source LTE PLMN ID may be updated at the next SRVCC procedure from the Sv interface, if received.

Although the illustration in Figure 2 is using one CS PLMN with 2 LTE PLMNs, the same approach may be applied to a circuit switched public land mobile network shared by multiple operators.

In one case, a user equipment (UE) may start a CS call with PLMN-A and get handed over to target PLMN-CS. The source BTS/NodeB may select the "target CS PLMN" and can may comprise this selected "target CS PLMN" in a message to the PLMN-CS's MSS via normal BSS/RAN to MSS signaling, for example Iu-cs/A, for target resource handling. When this call is returned, going from PLMN-CS to PLMN-A with normal CS handover, the CS radio node, such as for example a BTS or NodeB, may select the target CS PLMN based on a current PLMN in use. This may still be the selected PLMN-A or other PLMN-x.

If a wrong PLMN-x is selected, the result may be an additional roaming leg being setup between PLMN-A and PLMN-x which may lead to unnecessary roaming charges because an additional PLMN is involved.

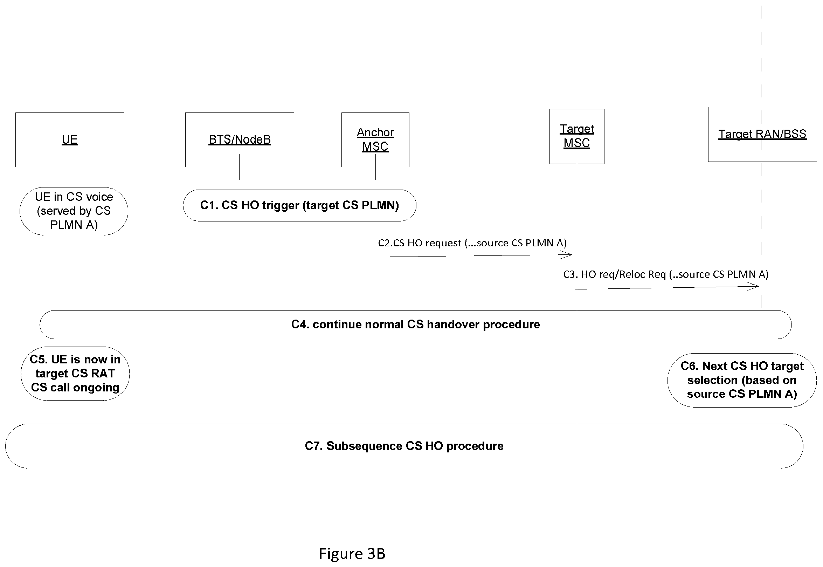

Figure 3B illustrates a signaling flow according to certain embodiments.

As shown in Figure 3B, when the call is first performing CS handover at C1, the source CS PLMN A may be carried to MSS via normal BSS/RAN-MSS signaling.

At C2 and C3, the anchor MSS may indicate this "source CS PLMN A" to target BSS/RAN via target MSC. Moreover, at C4 and C5, the rest of the CS handover procedure may be executed and the UE may be now served by target CS RAT. The voice call may continue in the CS Domain.

If there is an inter/intra CS RATs handover, the source BSS/RAN may forward the "source CS PLMN A" to the target BSS/RAN. This is not shown in Figure 3B.

At C6, when the current serving CS RAT may perform CS handover target selection, and may use the "source PLMN-A" as one of the inputs for target CS selection, to ensure that the selected PLMN will result in optimized manner, thereby avoiding, for example, any extra roaming leg setup. Thus, the current serving CS RAT may select a target CS cell that belongs to a source CS PLMN A. Alternatively, the current serving CS RAT may select a roaming partner of the source CS PLMN as a next option. The Neighbor cell list for UE measurement may be also based on the "source CS PLMN A".

At C7, the source BSS/RAN may pass the selected target CS PLMN back to the Anchor MSS to continue the normal CS HO procedure.

Thus, in certain embodiments the source CS PLMN ID may be given to the target CS PLMN and may be passed within the target CS PLMN from source to target during intra/inter RAT CS handover.

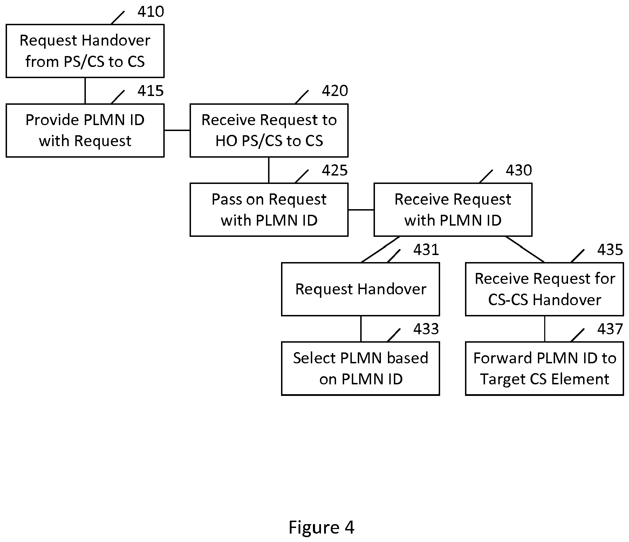

Figure 4 illustrates a method according to certain embodiments. As shown in Figure 4, a method may comprise, at 410, requesting handover of a user equipment from a source network to a target network. The method may also comprise, at 415, providing a network identification corresponding to the source network while requesting the handover.

The source network may be a packet-switched or circuit-switched network and the target network may be a circuit switched network. The network identification may comprise an identification of a current public land mobile network in use (for example the public land mobile network used when the call or session is first established) or a source public land mobile network identifier. The handover request may be a packet switched to circuit switched or circuit switched to circuit switched handover request comprising the network identification. Moreover, the handover request may be a single radio voice call continuity request from a packet switched network to a circuit switched network. The requesting the handover may be performed for example by a mobility management entity or serving general packet radio service support node or mobile switching center and the identification may be provided for example to a mobile switching center.

Alternatively, the source network may be a circuit switched network and the target network may be a circuit switched network. Moreover, the network identification may comprise an identification of a circuit switched public land mobile network used (for example an identification of a circuit switched public land mobile network used when the call is first established or used after a packet switched to packet switched handover) or a source circuit switched public land mobile network identifier. The handover request may be a circuit switched handover request comprising the network identification. Furthermore, the handover request may be a circuit switched handover request from one circuit switched radio access technology to another circuit switched radio access technology or from one circuit switched network to another circuit switched network. Additionally, the handover may be requested by the source network and identification may be provided to the target network.

The method may also comprise, at 420, receiving a request to handover a user equipment from a source network to a target network, and, at 425, passing on that request with a network identification. Passing on the request may comprise requesting handover of a user equipment from a source network to a target network and forwarding a network identification received previously at the source network to the target network.

The source network may be a circuit switched network and the target network may be a circuit switched network. The network identification may be for example a source public land mobile network identification from a packet switched network, which might have been received with an earlier packet switched to circuit switched handover request and might be a network identification of the earlier source packet switched network or a network identifier of the earlier source packet switched network. The handover request may be an inter-radio access technologies handover request or an intra-radio access technology handover request. Moreover, the handover request may comprise the network identifier.

Alternatively, the handover request may be transmitted from a source base station controller or source radio network controller to a target base station controller or a target radio network controller. The source network may be a circuit switched network and the target network may be a circuit switched network. The network identification may be a source public land mobile network identification from a circuit switched network, which might have been received with an earlier circuit switched to circuit switched handover request and might be a network identification of the earlier source circuit switched network or a network identifier of the earlier source circuit switched network.

The method may also comprise, at 430, receiving a request for handover of the user equipment from a source network to a target network. This receiving may comprise recording a network identifier comprised with the request. The method may further comprise, at 431, requesting handover of a user equipment from a source network to a target network, for example in a reverse direction to the previously mentioned handover. The method may also comprise, at 433, determining the target network based on a network identification received previously.

The source network may be a circuit switched network and the target network may be a packet switched network. The network identification may be a source public land mobile network identification from the packet switched network (for example received from the packet switched network), or a target public land mobile network identifier. The handover request may be a circuit switched to packet switched handover request comprising the network identification. For example, the handover may be a reverse single radio voice call continuity handover. Moreover, the handover request may be transmitted from a base station controller or radio network controller to a mobile switching station. Moreover, the network identification may be one that was received with an earlier packet switched to circuit switched handover request and may be a network identification of an earlier used source packet switched public land mobile network.

Furthermore, at 435, the method may comprise receiving a request for handover of a user equipment from a source network to a target network. The method may also comprise, at 437, forwarding a network identification corresponding to the source network to the target network.

The source network may be a packet switched network and the target network may be a circuit switched network. More particularly, the network identification may be a current packet switched public land mobile network in use information or a source packet switched public land mobile network identifier. The handover request may be a packet switched to circuit switched handover request comprising the network identification. The handover request may be a reverse single radio voice call continuity handover request. Furthermore, the handover request may be received from a mobility management entity or serving general packet radio service support node and forwarded to a base station controller or radio network controller.

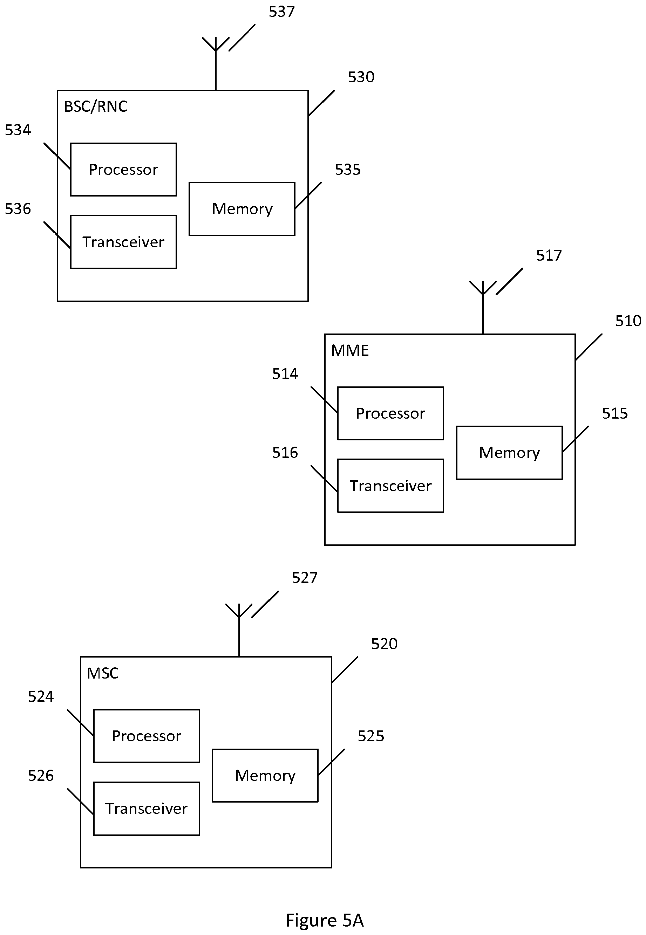

Figure 5A illustrates a system according to certain embodiments. In an example embodiment, a system may comprise of several devices, like MME 510, MSC 520, and BSC/RNC 530. These devices are merely illustrative of many other devices that can be used, such as the devices shown in Figures 2 and 3. Each of the devices 510, 520, and 530 may be equipped with at least one processor (respectively 514, 524, and 534), at least one memory (respectively 515, 525, and 535) (comprising computer program instructions or code), a transceiver (respectively 516, 526, and 536), and an antenna (respectively 517, 527, and 537). There is no requirement that each of these devices be so equipped. For example, it is not required that any of the devices be equipped for wireless communication, but instead may be connected by wired connections.

The transceiver (respectively 516, 526, and 536) may be a transmitter, a receiver, both a transmitter and a receiver, or a unit that is configured both for transmission and reception, and can comprise a network interface card. The transceiver (respectively 516, 526, and 536) may be coupled to corresponding one or more antenna(s) (respectively 517, 527, and 537), or other communications hardware in the case that antenna(s) are not used.

The at least one processor (respectively 514, 524, and 534) may be variously embodied by any computational or data processing device, such as a central processing unit (CPU) or application specific integrated circuit (ASIC). The at least one processor (respectively 514, 524, and 534) may be implemented as one or a plurality of controllers.

The at least one memory (respectively 515, 525, and 535) may be any suitable storage device, such as a non-transitory computer-readable medium. For example, a hard disk drive (HDD) or random access memory (RAM) may be used in the at least one memory (respectively 515, 525, and 535). The at least one memory (respectively 515, 525, and 535) may be on a same chip as the corresponding at least one processor (respectively 514, 524, and 534), or may be separate from the corresponding at least one processor (respectively 514, 524, and 534).

The computer program instructions may be any suitable form of computer program code. For example, the computer program instructions may be a compiled or interpreted computer program.

The at least one memory (respectively 515, 525, and 535) and computer program instructions may be configured to, with the at least one processor (respectively 514, 524, and 534), cause a hardware apparatus (for example, MME 510, MSC 520, or BSC/RNC 530) to perform a process, such as any of the processes described herein (see, for example, Figures 3 and 4).

Thus, in certain embodiments, a non-transitory computer-readable medium may be encoded with computer instructions that, when executed in hardware perform a process, such as one of the processes described herein. Alternatively, certain embodiments of the present invention may be performed entirely in hardware.

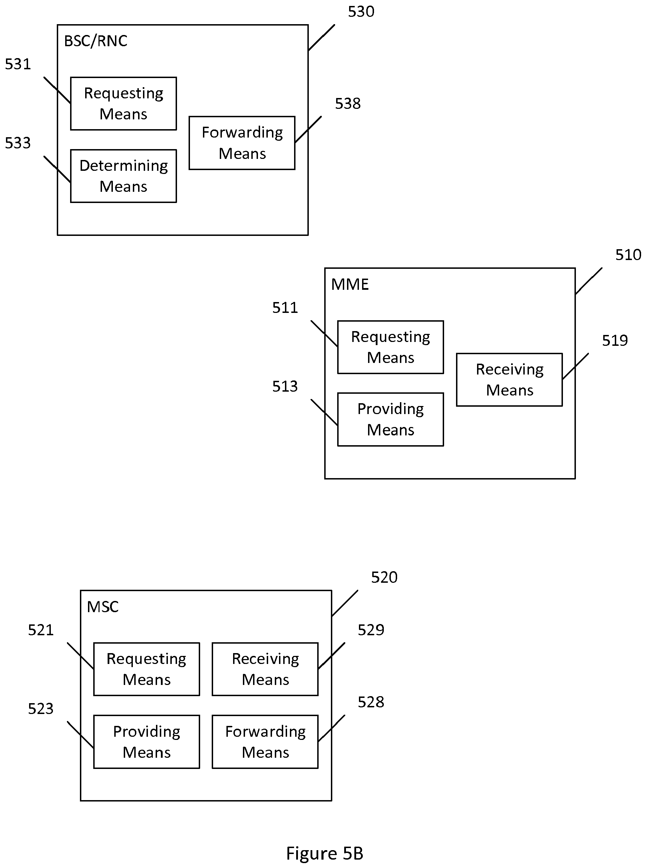

Figure 5B illustrates a system according to certain embodiments. In an example embodiment, a system may comprise several devices, for example MME 510, MSC 520, and BSC/RNC 530. These devices are merely illustrative of many other devices that can be used, such as the devices shown in Figures 2 and 3.

For example, the MME 510 and the MSC 520 may each comprise requesting means (respectively 511 and 521) for requesting handover of a user equipment from a source network to a target network and providing means (respectively 513 and 523) for providing a network identification corresponding to the source network while requesting the handover. The BSC/RNC may similarly comprise requesting means 531 for requesting handover of a user equipment from a source network to a target network and determining means 533 for determining the target network based on a network identification received previously.

The MSC 520 and the BSC/RNC 530 may also comprise forwarding means (respectively 528 and 538) for forwarding a network identification received previously at the source network to the target network. The MSC 520 may also comprise receiving means 529 for receiving a request for handover of a user equipment from a source network to a target network.

The means illustrated in Figure 5B may be variously implemented, for example in hardware alone and in software running on hardware. One example of an implementation is illustrated in Figure 5A, discussed above.
Therefore, although the invention has been described based upon these preferred embodiments, it would be apparent to those of skill in the art that certain modifications, variations, and alternative constructions would be apparent and remain within the scope of the invention as longs as these modifications, variations and alternatives do not extend beyond the scope of the appended claims.

## Claims

1. A method for handover in a network sharing scenario, comprising:
requesting (S7), by a network element of a radio access network (530) of a source circuit-switched network, reverse single radio voice call continuity call handover of a user equipment (UE) from the source circuit-switched network to a target packet-switched network or a roaming partner of the target packet-switched network; and
determining (S6), by the network element of the radio access network (530) the target packet-switched network based on a public land mobile network identification of the target packet-switched network received previously in a single radio voice call continuity call handover request (S3) for the user equipment from the target packet-switched network to the source circuit-switched network.

2. The method of claim 1, wherein the reverse single radio voice call continuity call handover request is transmitted (S2) from a base station controller (530) or radio network controller (530) to a mobile switching center (520).

3. A non-transitory computer-readable medium encoded with instructions that, when executed by a radio access network apparatus, perform a process, the process comprising the method according to any of claims 1 to 2.

4. A network element of a radio access network apparatus (530), comprising:
at least one processor; and
at least one memory comprising computer program code,
wherein at the at least one memory and the computer program code are configured to, with the at least one processor, cause the apparatus at least to
perform the method of any of claims 1 to 2.

## Patentansprüche

1. Verfahren zur Übergabe in einem Netzwerkfreigabeszenario, das Folgendes umfasst:
Anfordern (S7) einer Anrufübergabe für umgekehrte Einzelfunksprachanrufkontinuität einer Teilnehmereinrichtung (UE) von einem Quellleitungsvermittlungsnetzwerk an ein Zielpaketvermittlungsnetzwerk oder einen Roamingpartner des Zielpaketvermittlungsnetzwerks eines Funkzugangsnetzwerks durch ein Netzwerkelement (530) des Quellleitungsvermittlungsnetzwerks; und
Bestimmen (S6) des Zielpaketvermittlungsnetzwerks durch das Netzwerkelement des Funkzugangsnetzwerks (530) auf Basis einer öffentlichen Mobilfunklandnetzwerkidentifikation des Zielpaketvermittlungsnetzwerks, die zuvor in einer Anrufübergabeanforderung (S3) für eine Einzelfunksprachanrufkontinuität für die Teilnehmereinrichtung vom Zielpaketvermittlungsnetzwerk zum Quellleitungsvermittlungsnetzwerk empfangen wurde.

2. Verfahren nach Anspruch 1, wobei die Anrufübergabeanforderung für umgekehrte Einzelfunksprachanrufkontinuität von einer Basisstationssteuerung (530) oder einer Funknetzwerksteuerung (530) zu einer Mobilvermittlungszentrale (520) übertragen wird (S2) .

3. Nichttransitorisches computerlesbares Medium, das mit Anweisungen codiert ist, die, wenn sie von einer Funkzugangsnetzwerkvorrichtung ausgeführt werden, einen Prozess durchführen, wobei der Prozess das Verfahren nach einem der Ansprüche 1 bis 2 umfasst.

4. Netzwerkelement einer Funkzugangsnetzwerkvorrichtung (530), das Folgendes umfasst:
mindestens einen Prozessor; und
mindestens einen Speicher, der einen Computerprogrammcode umfasst,
wobei bei der mindestens eine Speicher und der Computerprogrammcode dazu ausgelegt sind, die Vorrichtung mit dem mindestens einen Prozessor mindestens zu Folgendem zu veranlassen
Durchführen des Verfahrens nach einem der Ansprüche 1 bis 2.

## Revendications

1. Procédé pour un transfert dans un scénario de partage de réseau, comprenant :
la demande (S7), par un élément de réseau d'un réseau d'accès radio (530) d'un réseau à commutation de circuits source, d'un transfert d'appel de continuité d'appel vocal radio unique inverse d'un équipement utilisateur (UE) du réseau à commutation de circuits source à un réseau à commutation de paquets cible ou à un partenaire itinérant du réseau à commutation de paquets cible ; et
la détermination (S6), par l'élément de réseau du réseau d'accès radio (530) du réseau à commutation de circuits cible sur la base d'une identification de réseau mobile terrestre public du réseau à commutation de paquets cible reçu précédemment dans une demande de transfert d'appel de continuité d'appel vocal radio unique (S3) pour l'équipement utilisateur du réseau à commutation de paquets cible au réseau à commutation de circuits source.

2. Procédé selon la revendication 1, dans lequel la demande de transfert d'appel de continuité d'appel vocal radio unique inverse est transmise (S2) d'un contrôleur de station de base (530) ou d'un contrôleur de réseau radio (530) à un centre de commutation mobile (520).

3. Support lisible par ordinateur non transitoire encodé avec des instructions qui, lorsqu'elles sont exécutées par un appareil de réseau d'accès radio, effectuent un processus, le processus comprenant le procédé selon l'une quelconque des revendications 1 à 2.

4. Elément de réseau d'un appareil de réseau d'accès radio (530), comprenant :
au moins un processeur ; et
au moins une mémoire comprenant un code de programme informatique,
dans lequel la au moins une mémoire et le code de programme informatique sont configurés pour, avec le au moins un processeur, amener l'appareil au moins à
effectuer le procédé selon l'une quelconque des revendications 1 à 2.
